(19) Europäisches Patentamt
European Patent Office
Office européen des brevets

(11) Veröffentlichungsnummer: **0 278 515 B1**

(12) # EUROPÄISCHE PATENTSCHRIFT

(45) Veröffentlichungstag der Patentschrift: **12.06.91**

(51) Int. Cl.5: **C02F 1/76**, C02F 1/70

(21) Anmeldenummer: **88102037.4**

(22) Anmeldetag: **11.02.88**

(54) **Mittel zur Eliminierung von Chloramin.**

(30) Priorität: **12.02.87 DE 3704295**

(43) Veröffentlichungstag der Anmeldung:
**17.08.88 Patentblatt 88/33**

(45) Bekanntmachung des Hinweises auf die Patenterteilung:
**12.06.91 Patentblatt 91/24**

(84) Benannte Vertragsstaaten:
**AT BE CH DE ES FR GB GR IT LI LU NL SE**

(56) Entgegenhaltungen:
**EP-A- 0 203 741**

(73) Patentinhaber: **Tetra Werke Dr.rer.nat. Ulrich Baensch GmbH**
**Herrenteich 78**
**W-4520 Melle 1(DE)**

(72) Erfinder: **Ritter, Günter, Dr.**
**Gerdenerstrasse 21**
**W-4520 Melle(DE)**

(74) Vertreter: **Mansmann, Ivo**
**c/o Gödecke AG - Patentabteilung Postfach 569 Mooswaldallee 1-9**
**W-7800 Freiburg(DE)**

**EP 0 278 515 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Mitteln zur raschen Eliminierung von Aktivchlorverbindungen, insbesondere Chloramin, zur gleichzeitigen oder auch alleinigen Bindung von freigesetztem oder vorliegendem Ammoniak und zur Bindung von Schwermetallionen, sowie deren Verwendung zur Aufbereitung Wasser, besonders von Trink-, Süß- oder Meerwasser für Zucht und Haltung von Wassertieren in Aquarien, Teichen, Becken, Kreislaufsystemen oder Transportbehältern.

Besonders in warmen Ländern unserer Erde wird zur Lösung von Verkeimungsproblemen in Trinkwasser-Versorgungssystemen in zunehmendem Maße anstelle von Chlor, Hypochlorit, Chlordioxid oder ähnlichen Aktivchlorverbindungen auch Chloramin ($H_2NCl$) zur Trinkwasserdesinfektion eingesetzt. In einigen US-Staaten zum Beispiel werden dabei Chloraminkonzentrationen im Bereich 0,2 -2,5 mg/l angewendet.

Diese für den Menschen noch völlig unbedenklichen Konzentrationen erweisen sich an Aquarienfischen schon als beginnend bis hochtoxisch, wie ein Vergleich mit den mittleren Toxizitätsdaten zeigt:

$LC_0$ = 0,1 - 0,15 mg/l $H_2NCl$
$LC_{50}$ = 0,3 - 0,35 mg/l $H_2NCl$
$LC_{100} \geqq$ 0,8 mg/l $H_2NCl$

Bei der Neubefüllung eines Aquariums oder sogar schon bei einem teilweisen Wasseraustausch (≧ 10 % Frischwasser) muß bei Verwendung des mit Chloramin versetzten Trinkwassers mit deutlichen bis zu hundertprozentigen Todesraten bei Aquarienfischen gerechnet werden. Die lethale Giftwirkung des Chloramins setzt dabei innerhalb von fünf bis dreißig Minuten ein.

Erschwert wird die geschilderte Frischwassersituation noch durch die Tatsache, daß bei der von den Wasserwerken vorgenommenen Chloraminzudosierung nicht reines $H_2NCl$, sondern in der Regel Natriumhypochlorit-Lösung oder Chlor zusammen mit Ammoniak dem Wasser zugesetzt wird. Dabei bildet sich Chloramin nach den folgenden Reaktionsgleichungen:

$$Cl_2 + NH_3 \rightarrow H_2NCl + H^+ + Cl^-$$

sowie

$$HOCl + NH_3 \rightarrow H_2NCl + H_2O$$

Häufig wird hier mit überschüssigem Ammoniak gearbeitet, so daß das solcherart aufbereitetes Trinkwasser neben Chloramin noch Ammoniak enthält.

Aufgabe der Erfindung war es daher, Mittel zu finden, die zur Aufbereitung von Wasser, besonders aber von Trink-, Süß- oder Meerwasser für Zucht und Haltung von Wassertieren in Aquarien, Teichen, Becken, Kreislaufsystemen oder Transportbehältern, geeignet sind und welche rasch Chloramin reduzieren, da langsam wirkende Mittel wegen der schnell einsetzenden lethalen Giftwirkung des Chloramins nicht wirksam und sicher sind, gleichzeitig freigesetzten beziehungsweise auch alleinig vorliegenden Ammoniak binden und damit ebenfalls unschädlich machen sowie zur Bindung von Schwermetallionen befähigt sind und und in einem "Einschritt-Prozeß" alle Teilaufgaben lösen.

Eine bekannte Lösung dieses Problems zur Entfernung von Chloramin und Ammoniak ist die Reduktion von Chloramin durch Natriumthiosulfat. Der bei der Reduktion nach folgender Gleichung

$$\underset{\text{Chloramin}}{H_2NCl} + \underset{\text{Reduktor}}{H^+ + 2e^-} \longrightarrow \underset{\text{Ammoniak}}{NH_3} + \underset{\text{Chlorid}}{Cl^-}$$

freiwerdende Ammoniak kann jedoch nicht von Natriumthiosulfat gebunden werden. Dieser Aspekt der Ammoniakbindung ist für den anwendenden Aquarianer oder Fischzüchter ebenfalls von großer Wichtigkeit, da Ammoniak bekannterweise ein starkes Fischgift darstellt. Deshalb wird nachfolgend eine Adsorption des Ammoniaks an aktive Materialien, wie beispielsweise Zeolithe erforderlich. Schwermetalle können dagegen allerdings von Thiosulfationen zu Thiosulfatokomplexen gebunden werden, wodurch ihre Toxizität verkleinert wird.

Als ein weiteres Mittel ist das Hydrogensulfitaddukt des Formaldehyds, Natrium-hydroxymethylsulfonat,

$Na^+HO-CH_2-SO_3^-$ zur Reduktion von Chloramin und zur Ammoniakbindung bekannt, wie es bspw in EP-A-0203741 offenbart ist.

Überraschenderweise wurde nun gefunden, daß Verbindungen, die formal als Addukte von Hydrogensulfoxylat-Anionen an aliphatische, aromatische oder heterozyklische Mono- oder Dialdehyde aufgefaßt werden können, hervorragend für die Lösung dieser Aufgaben geeignet sind. Weiterhin wurde gefunden, daß Mischungen dieser Verbindungen mit den entsprechenden Aldehyden die $NH_3$-Bindungskapazität noch erhöhen und zu einer unerwarteten Stabilisierung der Sulfinat-Lösungen führen. Die bei der Reaktion mit Ammoniak entstehenden Addukte weisen überdies ein sehr hohes Potential zu Bindung von Schwermetallionen auf, sodaß unter diesem Aspekt auch eine Verwendung der entsprechenden Amino-, Imino- und Nitrilo-sulfinate, deren Redoxeigenschaften der Sulfinat-Gruppe gegenüber Chloramin und anderen Aktivchlorverbindungen nicht herabgesetzt sind, allein oder im Gemisch mit den vorangehend genannten Verbindungen zweckmäßig sein kann.

Gegenstand der vorliegenden Erfindung ist daher die Verwendung von Mittel, welche Hydroxy-Sulfinate, die als Addukte von Hydrogensulfoxylat-Anionen an aliphatische, aromatische oder heterozyklische Mono- oder Dialdehyde betrachtet werden können entsprechend der allgemeinen Gleichung

$$R\text{-}CH{=}O + Me^{n+} (HSO_2^-)_n \rightarrow Me^{n+} (R\text{-}CH(OH)\text{-}SO_2^-)_n$$

in welcher $Me^{n+}$ ein 1- bis 3- wertiges Metall-Kation bedeutet und für $n=1$ auch Wasserstoff sein kann, sowie deren Addukte mit Ammoniak, die entsprechenden Amino-, Imino- bzw. Nitrilo-Sulfinate, entweder allein oder im Gemisch miteinander, sowie gegebenenfalls auch im Gemisch mit den entsprechenden Aldehyden enthalten zur Wasseraufbereitung, insbesondere zur Aufbereitung von Trink-, Süß- oder Meerwasser für Zucht und Haltung von Wassertieren in Aquarien, Teichen, Becken, Kreislaufsystemen oder Transportbehältern.

Theoretisch lassen sich von allen bekannten aliphatischen und aromatischen bzw. heterocyclischen Aldehyden die korrespondierenden Hydroxymethyl-sulfinate mit graduell verschiedener aber im Prinzip vergleichbarer Reaktivität gegenüber Chloramin und Ammoniak herstellen und auch für den erfindungsmäßigen Zweck einsetzen.

Bevorzugt sind geradkettige oder verzweigte aliphatische Mono-oder Dialdehyde mit bis zu 5 Kohlenstoff-Atomen, Furfurylaldehyd, Benzaldehyd und Salicylaldehyd und als Kationen Wasserstoff, Natrium, Kalium, Magnesium, Calcium und Aluminium.

Ganz besonders bevorzugt ist als Anion Hydroxymethyl-sulfinat, Aminomethyl-sulfinat, Imino-di-(methylsulfinat) und Nitrilo-tri-(methylsulfinat), als Kation Wasserstoff oder Natrium und als Aldehyd Formaldehyd.

Alle aufgeführten, reinen Verbindungen und Derivate und Zubereitungen aus diesen Verbindungen sind in der Lage, nach dem Einbringen in kontaminiertes Aquarienwasser oder Frischwasser, Trinkwasser, Transportwasser (im Süß- und Seewasserbereich), dieses zu entgiften, indem sie Aktivchlorverbindungen, wie z. B. $OCl^-$, $Cl_2$, HOCl, organische N-Chlorverbindungen, $ClO_2$, Chloramine, rasch (in 1 - 2 Minuten) und vollständig reduzieren, zusätzlich parallel dazu bei der Reduktion freigesetztes Ammoniak oder Amine zum überwiegenden Anteil (ca. 50 - 90 %) binden und außerdem allein vorhandenen Ammoniak zum großen Teil (ca. 50 - 90 %) binden. Weiterhin sind die bei der Reaktion mit Ammoniak entstehenden N-Organylsulfinate besonders befähigt, dürch Chelatbildung Schwermetalle zu binden unter Erhalt ihrer Redoxeigenschaften, sodaß auch diese in den erfindungsgemäßen Zubereitungen zweckmäßigerweise für bestimmte Anwendungen bereits mit vorhanden sein können oder auch alleinig eingesetzt werden können.

Alle dabei ablaufenden Reaktionen sind nachfolgend am Beispiel der bekanntesten und auch am einfachsten verfügbaren Stammverbindung, dem Hydroxymethyl-sulfinat bzw. dessen Natriumsalz, $(HO\text{-}CH_2\text{-}SO_2)^- Na^+$, bekannt unter dem Namen Rongalit und formal ein Hydrogensulfoxylat-Addukt des Formaldehyds, beschrieben. Prinzipiell können sie jedoch auf beliebige an der Methylgruppe substituierte Hydroxymethylsulfinate übertragen werden. So sind beispielsweise die Sulfoxylat-Addukte von Acetaldehyd, Butyraldehyd oder Benzaldehyd ebenfalls technisch verfügbar).

Entsprechend seiner Redoxeigenschaften reagiert das Hydroxymethylsulfinat-Anion mit Chloramin im Molverhältnis 1 : 2 nach der Gleichung

$$HO\text{-}CH_2\text{-}SO_2^- + 3H_2O + 2H_2NCl \rightarrow$$
$$\rightarrow HO\text{-}CH_2\text{-}OH + 2NH_3 + HSO_4^- + 2Cl^- + 2H^+$$

Diese $H_2NCl$-Reduktion verläuft sehr rasch in etwa 1 - 2 Minuten vollständig unter Erzeugung von 2

Molen Ammoniak und einem Mol Formaldehyd, der allein nicht mehr oder nur extrem langsam mit weiterem Chloramin reagiert.

Ein Teil des Ammoniaks wird vom freigesetzten Formaldehyd nach

$$HO\text{-}CH_2\text{-}OH + NH_3 \rightarrow H_2N\text{-}CH_2\text{-}OH + H_2O$$

und nachfolgend weiter nach

$$H_2N\text{-}CH_2\text{-}OH + NH_3 \rightarrow H_2N\text{-}CH_2\text{-}NH_2 + H_2O$$

zu $NH_3$-Addukten reversibel gebunden.

Das Hydroxymethylsulfinat-Anion reagiert mit Ammoniak je nach dem Molverhältnis unter Bildung von Aminomethylsulfinat, $H_2N\text{-}CH_2\text{-}SO_2^-$, im Molverhältnis 1 : 1; Imino-di-(methylsulfinat), $NH(CH_2\text{-}SO_2^-)_2$, im Molverhältnis 1 : 2; und Nitrilo-tri-(methylsulfinat), $N(CH_2\text{-}SO_2^-)_3$ im Molverhältnis 1 : 3.

Diese Reaktion erfolgt beim Molverhältnis 1 : 1 ungefähr mit 55 - 80 %igem Umsatz, beim Molverhältnis 1 : 2 (100 % Hydroxymethylsulfinat-Überschuß) ungefähr mit 72 - 92 %igem Umsatz und beim Molverhältnis 1 : 3 ungefähr mit 87 - 96 %igem Umsatz, bezogen auf eingesetztes Ammoniak. Das Ausmaß der Reaktion hängt vom Elektrolytgehalt des Wassers und von der absoluten Ammoniakkonzentration ab.

Die Addukte des Hydroxymethylsulfinat-Anions mit Ammoniak, $NH_2\text{-}CH_2\text{-}SO_2^-$, $NH\text{-}(CH_2\text{-}SO_2)_2^{2-}$ und $N\text{-}(CH_2\text{-}SO_2)_3^{3-}$, ergeben Anionen mit zwei-, drei- und vierzähnigem Ligandcharakter. Diese Chelatliganden können mit toxischen Schwermetallen, z. B. mit $Cu^{2+}$, $Zn^{2+}$, $Cd^{2+}$ usw., Chelatkomplexe bilden und dadurch zur Reduzierung der Toxizität dieser Schwermetalle führen.

Da die beschriebene Adduktbildung aus Ammoniak und Hydroxyorganyl-sulfinaten reversibel ist und die Redoxeigenschaften der Sulfinat-Gruppe davon kaum tangiert werden, ist die Reaktivität der Addukte gegenüber Chloramin mit der des freien Hydroxymethyl-sulfinat vergleichbar, und die Ammoniakaddukte lassen sich daher ebenfalls zur Chloraminreduktion, $NH_3$-Bindung mit einer allerdings etwas verringerten $NH_3$-Bindungskapazität, und Schwermetallbindung einsetzen.

Die Schwermetallbindungskapazität der Imino- und Nitrilo-methyl-sulfinate ist von bereits anwesendem $NH_3$ unabhängig und daher im Vergleich zu Hydroxymethyl-sulfinaten, wo erst die entsprechenden $NH_3$-Addukte gebildet werden müssen, günstiger einzustufen.

Diese Eigenschaften der genannten Verbindungen und deren Zubereitungen zur erfindungsgemäßen Verwendung der Wasseraufbereitung und besonders in der Aquaristik zur raschen und vollständigen Reduktion von Aktivchlorverbindungen, insbesondere Chloramin, zur gleichzeitigen oder unabhängigen kovalenten Bindung von Ammoniak und zur komplexen Bindung von Schwermetallen durch die $NH_3$-Addukte konnte von der bislang gebräuchlichen Verwendung dieser Verbindungsklasse in der Küpenfärberei nicht abgeleitet werden.

Die oben beschriebenen Reaktionen, die im Aquarium selbst bei sehr kleinen Schadstoffkonzentrationen von $H_2NCl$, $NH_3$ oder Schwermetallen noch in hohen Umsatzraten bis 100 % verlaufen, waren für den Fachmann nicht vorhersehbar und daher überraschend.

Neben der ausführlich beschriebenen, trifunktionalen Aufbereitung von Wasser, besonders aber Aquarienwässern (Süßwasser, Seewasser) können alle drei oder auch ausgewählte Aufbereitungsfunktionen in folgenden Systemen bzw. Wassertypen eingesetzt werden:

Sämtliche Sport- und Nutzfischhälterungssysteme (Teiche, Becken, Kreislaufanlagen) mit Süß- und Seewasser bei $H_2NCl$-, $NH_3$- und Schwermetallproblemen;

Zusatz zum Transportwasser von Wasserorganismen zur Detoxifizierung von Ammoniak, der von den Organismen ausgeschieden wird;

Garten- und Zierteiche mit dichtem Fischbesatz zur Milderung von potentiellen Ammoniakkonzentrationsspitzen bei mangelhafter Nitrifizierung und zur $H_2NCl$-Reduktion bei Neubefüllung und Wasseraustausch;

Behandlung von frischem Leitungswasser, welches zur Ergänzung von verdunstetem Wasser in Seewasseraquarien verwendet wird;

Behandlung von frischem Wasser für und von Häterungswasser in Wasserschildkrötenbehältern.

Zur Veranschaulichung der Wirkung der genannten Verbindungen sind in der nachfolgenden Tabelle I experimentelle Ergebnisse für Süß- und Seewasser dargestellt und mit der Reaktivität von reaktivem Formaldehyd verglichen.

TABELLE I

| Gesamtammoniak-Reduktion in % der Ausgangskonzentration | | | | | | |
|---|---|---|---|---|---|---|
| Molverhältnis $NH_3$ : A bzw. B | Aqua demin. | | Leitungswasser | | Seewasser | |
| | A | B | A | B | A | B |
| 1 : 1 | 57 | 56 | 55 | 44 | 80 | 77 |
| 1 : 2 | 77 | 76 | 72 | 72 | 92 | 94 |
| 1 : 3 | 89 | 89 | 87 | 83 | 96 | 96 |

A : Hydroxymethylsulfinat
B : Formaldehyd

Die Totalkonzentration an Ammoniak/Ammonium lag bei allen Messungen bei 180 - 200 µMol/l, entsprechend ca. 3,1 - 3,5 mg/l $NH_3$ + $NH_4^+$ und damit in einem Konzentrationsbereich, der in belasteten Aquarienwässern und Fischtransportwässern leicht erreicht wird und schon erheblich fischschädliche Auswirkungen aufweisen kann.

Die Anwendung von reinem Rongalit bzw. Natrium-hydroxymethylsulfinat erfolgt bevorzugt in fester Form, beispielsweise als Pulver, Pellets, Tabletten, Kapseln oder Sachets, da es sehr instabil in Lösungen ist.

Das farblose, kristalline Produkt löst sich im Aquarienwasser sehr rasch auf und reagiert in Lösung sofort in der oben beschriebenen Weise.

Die Anwendungskonzentrationen sind vom vorliegenden oder zu erwartenden $H_2NCl$- und/oder Ammoniakgehalt abhängig und betragen etwa 0,1 bis 500 mg, bevorzugt 1 bis 10 mg Hydroxymethylsulfinat pro Liter aufzubereitenden Wassers.

Typische Anwendungskonzentrationen sind beispielsweise 3 mg/l Rongalit für 2,5 mg/l $H_2NCl$ bzw. ca. 6 mg/l Rongalit für eine zusätzliche und umfassendere Bindung von freigesetztem und/oder vorhandenem Ammoniak.

Wie in Tabelle I gezeigt wurde, besitzen zumindest reaktive Aldehyde, wie z. B. der Formaldehyd, ebenfalls die Eigenschaft, in verdünnten wässrigen Lösungen mit Ammoniak Addukte zu bilden.

Es ist daher sinnvoll, durch Zusatz des Stammaldehyds, z. B. Formaldehyd zu $Na^+HO\text{-}CH_2\text{-}SO_2^-$, die $NH_3$-Bindungskapazität von maximal 1 : 1 im Hydroxymethylsulfinat auf 1 : 2 oder mehr zu erhöhen und damit der Reduktionskapazität für Chloramin, 1 : 2, anzugleichen.

Der Zusatz der beiden Komponenten kann getrennt erfolgen, beispielsweise durch Zugabe von kristallinem $Na^+HO\text{-}CH_2\text{-}SO_2^-$ und in Wasser gelöstem Formaldehyd. Diese Vorgehensweise hat jedoch schwerwiegende Nachteile. Überraschenderweise wurde nun gefunden, daß beide Komponenten, z. B. Na-hydroxymethylsulfinat und Formaldehyd, kombinieret in wäßriger Lösung, beispielsweise im Molverhältnis 1 : 1 bis 1 : 3, zu einer zusätzlichen Stabilisierung des normalerweise lösungsinstabilen Na-hydroxymethylsulfinats führen. Solche Lösungen erwiesen sich zudem überraschenderweise als langzeitstabil.

Es wird vermutet, daß der stabilisierende Effekt des Aldehydzusatzes auf zwei Faktoren beruht und zwar zum einen in der Zurückdrängung der Hydrolyse des Hydroxymethylsulfinats zu Aldehyd und in stabiles Sulfoxylat, und andererseits zur Adduktbildung mit Aldehyd nach

$$HO\text{-}CH_2\text{-}SO_2^- + CH_2O + H^+ \leftrightarrow HO\text{-}CH_2\text{-}SO_2\text{-}CH_2\text{-}OH$$

zum Bis-hydroxymethyl-sulfon.

Auch diese Verbindungsklasse reagiert ganz analog mit Chloramin und Ammoniak.

Die Anwendung und Dosierung dieser Kombination erfolgt ganz analog der Anwendung der reinen Hydroxymethyl-sulfinate. Die zusätzlich dosierte Aldehydmenge geht aus dem gewählten Molverhältnis hervor.

Die Anwendung und Dosierung der $NH_3$-Addukte entspricht der Anwendung der Hydroxymethylsulfinate, wobei für die Ammoniakbindung die verringerte $NH_3$-Bindungskapazität berücksichtigt werden muß.

Auch die Kombination von Hydroxymethylsulfinat und Ammoniak erwies sich in wäßriger Lösung überraschend als langzeitstabil.

Die Verwendung der beschriebenen Mittel weist gegenüber der bereits bekannten Verwendung von Natrium-hydroxymethylsulfonat, $Na^+HO\text{-}CH_2\text{-}SO_3^-$, ein Reihe von gravierenden Unterschieden auf.

Ein prinzipieller Unterschied im chemischen Verhalten liegt in der Reaktivität der Oxidationsfolgeprodukte bei der Reaktion mit Chloramin:
Natrium-Hydroxymethylsulfonat: Bei der Oxidation entstehen Formaldehyd und Sulfat, die sich gegenüber weiterem Chloramin inert verhalten.
Natrium-hydroxymethylsulfinat: Bei der Oxidation wird zunächst die Natrium-hydroxymethylsulfonat-Stufe durchlaufen, die sowohl mit weiterem Chloramin reagiert als auch mit Ammoniak ein Addukt bildet.

Trotz der ähnlichen Struktur, wobei der Unterschied lediglich in der Oxyschwefelgruppe besteht, werden in der Praxis doch sehr große und vom Fachmann nicht erwartete und daher überraschende Unterschiede im chemischen Reaktionsverhalten beobachtet, die den erfindungsgemäßen Mitteln, beschrieben am Beispiel des Na-hydroxymethylsulfinats, die nachfolgenden Vorteile gegenüber dem Na-hydroxymethylsulfonat erbringen.

Die Reduktionskapazität gegenüber Chloramin und anderen Aktivchlorverbindungen ist doppelt so hoch, wodurch nur die halbe Anwendungsdosierung und damit halbe Belastung des Aquariumwassers erforderlich ist. Die Reaktionsgeschwindigkeit der $H_2NCl$-Reduktion ist wesentlich höher. Mit Aldehyden können in Lösung Bis-Aldehyd-Addukte (Bis-Hydroxyorganyl-sulfone) entstehen, die lanzeitstabil sind, sodaß eine Zubereitung, Lagerung und Verwendung als Applikationslösung möglich ist. Mit Ammoniak erfolgt die Bildung von 2 - 4-zähnigen Imino- und Nitrilomethyl-sulfinaten, die als Chelatliganden Schwermetalle binden und dadurch entgiften können, wobei eine ausgeprägte Schwermetallbindung mit den $NH_3$-Addukten gegenüber der sehr geringen des nur einzähnigen Sulfonats vorliegt.
Die folgenden Beispiele sollen zur Verdeutlichung der Anwendung und der Wirksamkeit der erfindungsgemäßen Zubereitungen dienen:

I. Reaktion mit Chloramin in Aquarienwässern

Es wurde die Wirkung von folgenden Rongalit-Zubereitungen auf Aquariumwaser mit einem Chloramin-Gehalt von 5 mg/l untersucht:

1.) Rongalit Pulver dosiert über Meßlöffel für 100 l Aquarienwasser 785 mg, für 10 US-gal. (37,85 l) 300 mg und für 250 US-gal. (946 l) 7,440 g

2.) Steckkapsel aus Hartgelatine mit 300 mg für 10 US-gal. (37,85 l) Aquariumwasser und 785 mg kristallinem Rongalit für 100 l Aquariumwasser

3.) Sachets aus Papier, Aluminium, PE mit 7440 mg kristallinem Rongalit für 250 US-gal. (946 l) Wasser.

4.) Tabletten (mit Preßhilfsmittel) mit 300 mg kristallinem Rongalit für 10 US-gal. (37,85 l) Aquarienwasser.

5.) Wässrige Lösungen von Rongalit und Formaldehyd im Verhältnis 1:1 mit

a) 102 mMol/l (15,7 g/l) Rongalit und 102 mMol/l (3,1 g/l) Formaldehyd mit einer Kapazität von 100 ml pro 200 Liter Wasser.

b) 198 mMol/l (30,5 g/l) Rongalit und 198 mMol/l (5,9 g/l) Formaldehyd mit einer Kapazität von 100 ml pro 100 US-gal. (387,5 l) Wasser.

c) 965 mMol/l (148 g/l) Rongalit und 965 mMol/l (29,0 g/l) Formaldehyd mit einer Kapazität von 500 ml pro 2500 US-gal. (9688 l) Wasser.

6.) Wässrige Lösungen von Rongalit und Ammoniak im Verhältnis 1:1

a) 102 mMol/l (15,7 g/l) Rongalit und 102 mMol/l (1,7 g/l) Ammoniak mit einer Kapazität von 100 ml pro 200 Liter Wasser.

b) 198 mMol/l (30,5 g/l) Rongalit und 198 mMol/l (3,4 g/l) Ammoniak mit einer Kapazität von 100 ml pro 100 US-gal. (387,5 l) Wasser.

c) 965 mMol/l (148 g/l) Rongalit und 965 mMol/l (16,4 g/l) Ammoniak mit einer Kapazität von 500 ml pro 2500 US-gal. (9688 l) Wasser.

7.) Wässrige Lösungen von Rongalit und Ammoniak im Verhältnis 2:1

a) 102 mMol/l (15,7 g/l) Rongalit und 51 mMol/l (0,87 g/l) Ammoniak mit einer Kapazität von 100 ml pro 200 Liter Wasser.

b) 198 mMol/l (30,5 g/l) Rongalit und 99 mMol/l (1,7 g/l) Ammoniak mit einer Kapazität von 100 ml pro 100 US-gal. (387,5 l) Wasser.

c) 965 mMol/l (148 g/l) Rongalit und 483 mMol/l (8,2 g/l) Ammoniak mit einer Kapazität von 500 ml pro 2500 US-gal. (9688 l) Wasser.

8.) wässrige Lösungen von Rongalit und Ammoniak im Verhältnis 3:1

a) 102 mMol/l (15,7 g/l) Rongalit und 34 mMol/l (0,58 g/l) Ammoniak mit einer Kapazität von 100 ml pro 200 Liter Wasser.

b) 198 mMol/l (30,5 g/l) Rongalit und 66 mMol/l (1,1 g/l) Ammoniak mit einer Kapazität von 100 ml pro 100 US-gal. (387,5 l) Wasser.

c) 965 mMol/l (148 g/l) Rongalit und 322 mMol/l (5,5 g/l) Ammoniak mit einer Kapazität von 500 ml pro 2500 US-gal. (9688 l) Wasser.

9.) Rongalit in fester Form entsprechend der Zubereitungen 1 bis 4 und gleichzeitige Zugabe von Formaldehyd bzw. Ammoniak in Lösung entsprechend der in den Beispielen 5 bis 8 angegebenen Mengen.

Die unter 1 bis 9 aufgeführten Zubereitungen wurden in den angegebenen Mengen Aquariumwasser (sowohl Süßwasser als auch synthetisches Meerwasser) mit einem Gehalt an 5 mg/l Chloramin aufgelöst und rasch durchmischt. Die nach einer Minute erfolgende Untersuchung auf Chloramin war in allen Fällen negativ.

II. Reaktion mit Ammoniak in Aquarienwässern

1. Es wurde die Wirkung von Rongalit auf Aquariumwasser (Süß- und Meerwasser) mit einem Gehalt an Ammoniak bei pH 6 bis pH 9 untersucht. Hierzu wurde Süß- und synthetisches Meerwasser mit ca. 190 - 200 µMol/l $NH_3$ versetzt (= 3,24 - 3,41 mg/l $NH_3$) und der Restgehalt an nichtgebundenem $NH_3$ bei pH 7,5 - 8,5 wurde 90 Minuten nach Zusatz von Rongalit in verschiedenen stöchiometrischen Verhältnissen von

a) 195 µMol/l (30,1 mg/l)

b) 390 µMol/l (60,1 mg/l)

c) 780 µMol/l (120 mg/l)

analytisch bestimmt.

2. Es wurde die Wirkung von äquimolarem Rongalit und Formaldehyd-Lösung auf Ammoniak in Süß- und Seewasser untersucht.

Von einer Stammlösung mit dem Gehalt 100 mMol/l Rongalit und 100 mMol/l Formaldehyd wurden zu Süß- und Seewasserproben mit einem $NH_3$-Gehalt von 166 µMol/l = 2,83 mg/l $NH_3$ entsprechende Volumina für verschiedene Reaktionsmolverhältnisse zudosiert:

a) Im Reaktionsmolverhältnis von

$NH_3$ : (Rongalit + Formaldehyd) = 1:1 welches besagt, daß zu 166 µMol/l $NH_3$ 166 µMol/l des Rongalit-Formaldehyd-Gemisches, d.h. 166 µMol/l Rongalit und 166 µMol/l Formaldehyd zudosiert wurden.

b) Im Reaktionsmolverhältnis 1:2 entsprechend 332 µMol/l (3,33 ml/l) Rongalit-Formaldehyd.

c) Im Reaktionsmolverhältnis 1:4 entsprechend 664 µMol/l (6,65 ml/l) Rongalit-Formaldehyd.

d) Im Reaktionsmolverhältnis 1:8 entsprechend 1328 µMol/l (13,3 ml/l) Rongalit-Formaldehyd.

In der folgenden Tabelle II sind die Versuchsergebnisse für Süß- und Seewasser aus den Versuchsreihen 1 und 2 zusammengestellt:

Tabelle II

| Versuch | Molverhältnis $NH_3$: Rongalit/Formaldehyd | gebundenes $NH_3$ in % der Ausgangs Konzentration | |
|---|---|---|---|
| | | Süßwasser | Seewasser |
| 1 a | 1:1 | 55 % | 80 % |
| 1 b | 1:2 | 72 % | 92 % |
| 1 c | 1:4 | 87 % | 96 % |
| 2 a | 1:1 | 67,1 % | 77 % |
| 2 b | 1:2 | 75,5 % | 90,2 % |
| 2 c | 1:4 | 89,9 % | 97,9 % |
| 2 d | 1:8 | 95,1 % | 100 % |

Aus Tabelle II ist ersichtlich, daß in Abhängigkeit vom molaren Reaktionsverhältnis und dem Reaktionsmedium mit reinem Rongalit und der Rongalit/Formaldehyd-Mischung zwischen 55 und 100 % des Ammoniaks gebunden werden.

## Ansprüche

1. Verwendung eines Mittels enthaltend Hydroxy-Sulfinate, die als Addukte von Hydrogensulfoxylat-Anionen an aliphatische, aromatische oder heterozyklische Mono- oder Dialdehyde betrachtet werden können entsprechend der allgemeinen Gleichung

   $$R\text{-}CH{=}O + Me^{n+} (HSO_2^-)_n \rightarrow Me^{n+} (R\text{-}CH(OH)\text{-}SO_2^-)_n$$

   in welcher $Me^{n+}$ ein 1- bis 3- wertiges Metall-Kation bedeutet und für $n = 1$ auch Wasserstoff sein kann, sowie deren Addukte mit Ammoniak, die entsprechenden Amino-, Imino- bzw. Nitrilo-Sulfinate allein und/oder im Gemisch miteinander und/oder im Gemisch mit den entsprechenden Aldehyden, für die Aufbereitung von Trink-, Süß- oder Meerwasser für Zucht und Haltung von Wassertieren in Aquarien, Teichen, Becken, Kreislaufsystemen oder Transportbehältern zur Reduktion von Aktivchlorverbindungen und/oder Bindung von Ammoniak und/oder Schwermetallionen.

2. Verwendung eines Mittels nach Anspruch 1, das dadurch gekennzeichnet ist, daß es Hydrogensulfoxylat-Anionen von geradkettigen oder verzweigten aliphatische Mono- oder Dialdehyden mit bis zu 5 Kohlenstoff-Atomen, Furfurylaldehyd, Benzaldehyd oder Salicylaldehyd und als Kationen Wasserstoff, Natrium, Kalium, Magnesium, Calcium oder Aluminum allein oder im Gemisch mit den entsprechenden Aldehyden enthält.

3. Verwendung eines Mittels nach Anspruch 1 oder 2, das dadurch gekennzeichnet ist, daß es aus der Gruppe Hydroxymethylsulfinat, Aminomethylsulfinat, Imino-di-(methylsulfinat) und/oder Nitrilo-tri-(methylsulfinat) eines oder mehrere als Anion, als Kation Wasserstoff und/oder Natrium allein oder zusammen mit Formaldehyd enthält.

4. Verwendung eines Mittels nach Anspruch 1 bis 3, das dadurch gekennzeichnet ist, daß es Natrium-hydroxymethylsulfinat enthält.

5. Wasseraufbereitungsmittel, dadurch gekennzeichnet, daß es Natrium-hydroxymethylsulfinat und Formaldehyd in wäßriger Lösung im molaren Verhältnis 1:1 bis 1:3 enthält.

6. Wasseraufbereitungsmittel, dadurch gekennzeichnet, daß es Natrium-hydroxymethylsulfinat und Ammoniak in wäßriger Lösung im molaren Verhältnis 1:1 bis 3:1 enthält.

7. Verwendung der Mittel nach Anspruch 1 bis 6 in Mengen von 0,1 bis 500 mg pro Liter Aquariumwasser.

## Claims

1. Use of an agent containing hydroxysulphinates, which can be regarded as adducts of hydrogen sulphoxylate anions in relation to aliphatic, aromatic or heterocyclic mono- or dialdehydes, according to the general equation:

$$R\text{-}CH=O + Me^{n+} (HSO_2^-)_n \rightarrow Me^{n+} (R\text{-}CH(OH)\text{-}SO_2^-)_n$$

where $Me^{n+}$ is a mono- to trivalent metal cation and, when n = 1, can also be hydrogen, as well as adducts thereof with ammonia, the corresponding amino-, imino- or nitrilo-sulphinates, either alone and/or mixed with one another, and/or mixed with the corresponding aldehydes, for the treatment of drinking, fresh or sea water for breeding and keeping aquatic animals in aquaria, ponds, tanks, circulating systems or transport containers for the reduction of active chlorine compounds and/or binding of ammonia and/or heavy metal ions.

2. Use of an agent according to claim 1, characterised in that it contains hydrogen sulphoxylate anions of straight-chain or branched aliphatic, mono- or dialdehydes with up to 5 carbon atoms, furfuryl aldehyde, benzaldehyde or salicylaldehyde and, as cations, hydrogen, sodium, potassium, magnesium, calcium or aluminium, alone or mixed with the corresponding aldehydes.

3. Use of an agent according to claim 1 or 2, characterised in that as anion it contains one or several from the group hydroxymethylsulphinate, aminomethylsulphinate, imino-di-(methylsulphinate) and/or nitrilo-tri-(methylsulphinate) and, as cation, hydrogen and/or sodium alone or together with formaldehyde.

4. Use of an agent according to claim 1 to 3, characterised in that it contains sodium hydroxymethylsulphinate.

5. Water treatment agent, characterised in that it contains sodium hydroxymethylsulphinate and formaldehyde in aqueous solution in the molar ratio of 1:1 to 1:3.

6. Water treatment agent, characterised in that it contains sodium hydroxymethylsulphinate and ammonia in aqueous solution in the molar ratio of 1:1 to 3:1.

7. Use of the agent according to claim 1 to 6 in amounts of from 0.1 to 500 mg per litre of aquarium water.

## Revendications

1. Utilisation d'un produit contenant des hydroxysulfinates, pouvant être considérés comme des produits d'addition d'anions hydrogénosulfoxylates et de mono- ou di- aldéhydes aliphatiques, aromatiques ou hétérocycliques, selon l'équation générale suivante :

$$R\text{-}CH=O + Me^{n+} (HSO_2^-)_n \rightarrow Me^{n+} (R\text{-}CH(OH)\text{-}SO_2^-)_n$$

dans laquelle $Me^{n+}$ est un cation métallique mono à trivalent et, pour n = 1, peut aussi être l'hydrogène, de même que leurs produits d'addition avec l'ammoniac, les amino-, imino- ou nitrilo-sulfinates correspondants, seuls ou en mélange, et éventuellement aussi en mélange avec les aldéhydes corespondants, pour le traitement de l'eau, en particulier le traitement de l'eau potable, de l'eau douce ou de l'eau de mer pour l'élevage et l'entretien des animaux aquatiques dans les aquariums, les étangs, les bassins, les circuits en recirculation ou les réservoirs de transport dans le but de réduire les composés contenant du chlore actif et/ou fixer l'ammoniac et/ou des ions de métaux lourds.

2. Utilisation d'un produit selon la revendication 1, caractérisé en ce qu'il contient des anions hydrogénosulfoxylates de mono- ou di-aldéhydes aliphatiques à chaîne droite ou ramifiée ayant jusqu'à 5 atomes

de carbone, de furfurylaldéhyde, de benzaldéhyde ou de salicylaldéhyde et, comme cations, des cations hydrogène, sodium, potassium, magnésium, calcium ou aluminium, seuls ou en mélanges avec les aldéhydes correspondants.

3. Utilisation d'un produit selon les revendications 1 ou 2, caractérisé en ce qu'il contient comme anions un ou plusieurs anions du groupe hydroxyméthylsulfinate, aminométhylsulfinate, imini-di-(méthylsulfinate) et/ou nitrilo-tri-(méthylsulfinate), qu'il contient comme cation 1'hydrogène et/ou le sodium, seuls ou avec le formaldéhyde.

4. Utilisation d'un produit selon les revendications 1 à 3, caractérisé en ce qu'il contient de l'hydroxyméthylsulfinate de sodium.

5. Produit pour le traitement de l'eau, caractérisé en ce qu'il contient selon une proportion molaire de 1:1 à 1:3 de l'hydroxyméthylsulfinate de sodium et du formaldéhyde en solution aqueuse.

6. Produit pour le traitement de l'eau, caractérisé en ce qu'il contient selon une proportion molaire de 1:1 à 3:1 de l'hydroxyméthylsulfinate de sodium et de l'ammoniac en solution aqueuse.

7. Utilisation des produits selon les revendications 1 à 6, en des quantités de 0,1 à 500 mg/l d'eau d'aquarium.